# EUROPEAN PATENT APPLICATION

(11) **EP 4 681 973 A1**
(43) Date of publication of application: **21.01.2026**
(21) Application number: 24921292.9
(22) Date of filing: 28.06.2024
(51) Int. Cl.: B60L 15/20, B61C 3/02, B60L 9/24, B61B 1/00

(54) **TRACTION POWER SYSTEM FOR VARIABLE FORMATION TRAIN AND VARIABLE FORMATION TRAIN**

(30) Priority: 02.02.2024 CN 202410153984
(71) Applicant: CRRC Changchun Railway Vehicles Co., Ltd., Changchun, Jilin 130000 (CN)
(72) Inventor: LI, Xuefei, Changchun, Jilin 130000 (CN); GUAN, Chao, Changchun, Jilin 130000 (CN); JIN, Wenbin, Changchun, Jilin 130000 (CN); ZHANG, Jingyan, Changchun, Jilin 130000 (CN)
(74) Representative: v. Bezold & Partner Patentanwälte - PartG mbB
(86) International application number: PCT/CN2024/102543
(87) International publication number: WO 2025/161256

(57) **Abstract**

The present application relates to the technical field of rail vehicles, and provides a traction power system for a variable formation train and a variable formation train. The traction power system comprises two fixed traction power units and N variable traction power units (2), the fixed traction power units are arranged on a leading car, and the variable traction power units (2) are arranged on intermediate cars. A train formation can be adjusted according to the requirements of different operational scenarios, rapidly achieving transitions between different formation forms of a train, greatly improving the flexibility of the train formation, and achieving the optimal train performance utilization. In addition, the fixed traction power units and the variable traction power units (2) exhibit high independence, the transitions between different formation forms are convenient, the train variable formation operation efficiency is improved; and the power redundancy is high, and the starting acceleration requirement of a user for a suburban train can be well met.

## Description

### CROSS REFERENCE TO RELATED APPLICATION

The present invention claims the priority to the Chinese patent application with the filing No. 2024101539840 filed with the Chinese Patent Office on February 2, 2024, and entitled "TRACTION POWER SYSTEM FOR VARIABLE FORMATION TRAIN AND VARIABLE FORMATION TRAIN", which is incorporated herein by reference in entirety.

### TECHNICAL FIELD

The present invention relates to a technical field of rail vehicles, and in particular to a traction power system for a variable formation train and a variable formation train.

### BACKGROUND

The operating characteristics of urban trains are large passenger capacity, low speed, and high acceleration and deceleration requirements within the urban area, while small passenger capacity, high speed, and low acceleration and deceleration requirements in suburban area. To conserve operating energy, train formation adjustments (e.g., multiple-unit operation, reduced-formation operation, etc.) are necessary in some scenarios to achieve quick transition between different vehicle formation forms and optimum utilization of vehicle performance. However, in the current traction power unit structure of urban trains, traction transformers and traction converters are large in size and weight, and each transformer and converter needs to be provided with a separate cooling unit, causing the high-voltage traction system to occupy a large amount of indoor space and a large percentage of the train weight, resulting in the need for fixed train formations. For example, the traction converter in one traction power unit is located on the first vehicle (motor car), the transformer and high-voltage electrical device on the second vehicle (trailer car), another traction converter on the third vehicle (motor car), and the auxiliary converter on the fourth vehicle (trailer car). This results in poor power redundancy in a traction system of the train, which cannot meet the starting acceleration requirements of urban trains, nor can it quickly adjust formation, resulting in poor formation flexibility.

### SUMMARY

In view of this, an objective of the present invention lies in providing a traction power system for a variable formation train and a variable formation train.

In a first aspect, an embodiment of the present invention provides a traction power system for a variable formation train, including two fixed traction power units and N variable traction power units, where N is a natural number; the fixed traction power units includes a first pantograph, a first high-voltage box, a first traction transformer, a first auxiliary converter, a first storage battery, a first traction converter, a second traction converter, and several traction motors; the first pantograph is connected to an input end of the first high-voltage box, and an output end of the first high-voltage box is connected to a high-voltage busbar; an input end of the first traction transformer is connected to the high-voltage busbar via a first disconnect switch, an output end of the first traction transformer is connected to the first traction converter and the second traction converter, respectively; an output end of the first traction converter is connected to four of the traction motors, and an output end of the second traction converter is connected to four of the traction motors; the output end of the first traction converter is further connected to an input end of the first auxiliary converter, an output end of the first auxiliary converter is connected to the first storage battery, and the first auxiliary converter is configured to charge the first storage battery; and the variable traction power unit includes a second traction transformer, a third traction converter, a fourth traction converter, a second auxiliary converter, and several traction motors; an input end of the second traction transformer is connected to the high-voltage busbar via a second disconnect switch; an output end of the second traction transformer is connected to the third traction converter and the fourth traction converter, respectively; an output end of the third traction converter is connected to four of the traction motors, an output end of the fourth traction converter is connected to four of the traction motors; and the output end of the third traction converter is further connected to an input end of the second auxiliary converter.

In some embodiments, each of the fixed traction power units is distributed across three adjacent cars, and each of the variable traction power units is distributed across two adjacent cars.

In some embodiments, the first high-voltage box includes a high-voltage input end, a high-voltage output end, a first current transformer, a first voltage transformer, a first vacuum circuit breaker, a first grounding switch, a fourth disconnect switch, and a second current transformer; the high-voltage input end is connected to an input end of the first current transformer, an output end of the first current transformer is connected to an input end of the first vacuum circuit breaker, an output end of the first vacuum circuit breaker is connected to one end of the fourth disconnect switch, the other end of the fourth disconnect switch is connected to an input end of the second current transformer, and the output end of the second current transformer is connected to the high-voltage output end; the output end of the first current transformer is connected to one end of a primary coil of the first voltage transformer, and the other end of the primary coil is grounded; and the first grounding switch is a bipolar grounding switch, wherein the input end and the output end of the first vacuum circuit breaker are respectively connected to one end of two poles of the first grounding switch, and the other ends of two poles of the first grounding switch are both grounded.

In some embodiments, a first lightning arrester is further provided between the output end of the first current transformer and ground; and a second lightning arrester is provided between the output end of the first vacuum circuit breaker and ground.

In some embodiments, the first traction converter and the third traction converter are traction-auxiliary-charging integrated converters; and the output end of the first traction converter is further connected to the first storage battery.

Secondly, embodiments of the present invention provide a variable formation train including 3+2N+3 cars, where N is a natural number, and the variable formation train further includes the traction power system for a variable formation train as described in any of the above embodiments, wherein one of the fixed traction power units is provided in the first three cars, one of the fixed traction power units is provided in the last three cars, and N variable traction power units are distributed in the intermediate 2N cars; and the first car and the last car of the train are pure trailer cars.

In some embodiments, a six-car formation is provided, wherein a first car, a second car, a third car, a fourth car, a fifth car, and a sixth car are adjacent to each other consecutively, one of the fixed traction power units is provided in the first car, the second car, and the third car, and one of the fixed traction power units is provided in the fourth car, the fifth car, and the sixth car, and no variable traction power unit is provided in the six-car formation, wherein both the first car and the sixth car are provided with the first auxiliary converter and the first storage battery; both the second car and the fifth car are provided with the first traction transformer, the first traction converter, and four traction motors; and both the third car and the fourth car are provided with the first pantograph, the first high-voltage box, the second traction converter, and four traction motors.

In some embodiments, an eight-car formation is provided, wherein a first car, a second car, a third car, a fourth car, a fifth car, a sixth car, a seventh car, and an eighth car are adjacent to each other consecutively; one of the fixed traction power units is provided in the first car, the second car and the third car, one of the fixed traction power units is provided in the sixth car, the seventh car and the eighth car, and one of the variable traction power units is provided in the fourth car and the fifth car, wherein both the first car and the eighth car are provided with the first auxiliary converter and the first storage battery; both the second car and the seventh car are provided with the first traction transformer, the first traction converter, and four traction motors; and both the third car and the sixth car are provided with the first pantograph, the first high-voltage box, the second traction converter, and four traction motors; and the second auxiliary converter, the third traction converter and four traction motors are provided on the fourth car, and the second traction transformer, the fourth traction converter and the four traction motors are provided on the fifth car; or the second auxiliary converter, the third traction converter and four traction motors are provided on the fifth car, and the second traction transformer, the fourth traction converter and four traction motors are provided on the fourth car.

In some embodiments, a ten-car formation is provided, wherein a first car, a second car, a third car, a fourth car, a fifth car, a sixth car, a seventh car, an eighth car, a ninth car, and a tenth car are adjacent to each other consecutively; one of the fixed traction power units is provided in the first car, the second car and the third car, one of the fixed traction power units is provided in the eighth car, the ninth car and the tenth car, one of the variable traction power units is provided in the fourth car and the fifth car; one of the variable traction power units is provided in the sixth car and the seventh car, wherein both the first car and the tenth car are provided with the first auxiliary converter and the first storage battery; both the second car and the ninth car are provided with the first traction transformer, the first traction converter, and four traction motors; and both the third car and the eighth car are provided with the first pantograph, the first high-voltage box, the second traction converter, and the four traction motors, where in each of the variable traction power units: the second auxiliary converter, the third traction converter, and four traction motors are provided in one car; and the second traction transformer, the fourth traction converter, and four traction motors are provided in the other car.

In some embodiments, a twelve-car formation is provided, wherein a first car, a second car, a third car, a fourth car, a fifth car, a sixth car, a seventh car, an eighth car, a ninth car, a tenth car, an eleventh car, and a twelfth car are adjacent to each other consecutively; one of the fixed traction power units is provided in the first car, the second car and the third car, one of the fixed traction power units is provided in the tenth car, the eleventh car and the twelfth car, one of the variable traction power units is provided in the fourth car and the fifth car; one of the variable traction power units is provided in the sixth car and the seventh car; and one of the variable traction power units is provided in the eighth car and the ninth car, wherein both the first car and the twelfth car are provided with the first auxiliary converter and the first storage battery; both the second car and the eleventh car are provided with the first traction transformer, the first traction converter, and four traction motors; and both the third car and the tenth car are provided with the first pantograph, the first high-voltage box, the second traction converter, and four traction motors, where in each of the variable traction power units: the second auxiliary converter, the third traction converter, and four traction motors are provided in one car; and the second traction transformer, the fourth traction converter, and four traction motors are provided in the other car.

Beneficial effects achieved by the present invention are as follows.

The traction power system for a variable formation train provided in the present invention includes two fixed traction power units and N variable traction power units, where N is a natural number (0, 1, 2, 3, 4, 5, 6, 7, 8, 9, 10, etc.). The fixed traction power units are provided in a leading car, and the variable traction power units are provided in intermediate cars. The train formation can be adjusted according to the requirements of different operational scenarios (e.g., 6-formation, 8-formation, 10-formation, 12-formation, 14-formation, 16-formation, 18-formation, 20-formation, etc.), rapidly achieving transitions between different formation forms of the train, greatly improving the flexibility of the train formation, and achieving the optimal train performance utilization. Furthermore, regardless of how the train formation is changed, the train only contains two pantographs and two high-voltage boxes, the high-voltage output ends of the high-voltage boxes are connected to the high-voltage busbar, and the traction transformers in both the fixed traction power units and the variable traction power units are connected to the high-voltage busbar via disconnect switches, providing strong independence between the fixed traction power units and the variable traction power units, facilitating transitions between different formation forms, and improving the efficiency of train formation operations and reducing workload. The traction transformer adopts a one-to-two configuration, with one traction transformer driving two traction converters, which is light in weight and can be mounted under the motor cars. At the same time, the fixed traction power units in the traction power system of the variable formation train in the present invention include eight traction motors (two motor cars and one trailer car), and the variable traction power units include eight traction motors (two motor cars). This provides high power redundancy and can be configured as, for example, 4 motors and 2 trailers (4M2T), 6 motors and 2 trailers (6M2T), or 8 motors and 2 trailers (8M2T) and so on, and the starting acceleration requirement of a user for an urban train can be well met.

To further enhance the understanding of the aforementioned objectives, features, and advantages of the present invention, the following describes a detailed description of preferred embodiments with drawings.

### BRIEF DESCRIPTION OF DRAWINGS

To more clearly illustrate the technical solutions of the embodiments of the present invention, the following briefly describes the drawings used in the embodiments. It should be understood that the following drawings only illustrate some embodiments of the present invention and should not be construed as limiting the scope of the present invention. For those ordinarily skilled in the art, other related drawings can be obtained based on these drawings without creative work.
Figure 1 shows a schematic diagram of a train layout of a traction power system for a variable formation train according to the present invention;
Figure 2 shows a schematic structural diagram of a traction power system for a variable formation train according to the present invention;
Figure 3 shows a schematic diagram of a circuit principle of a high-voltage box of the traction power system for a variable formation train according to the present invention; and
Figure 4 shows a schematic structural diagram of a layout of a six-car formation of a variable formation train according to the present invention.

1-first fixed traction power unit, 2-variable traction power unit, 3-second fixed traction power unit, 4-first pantograph, 5-second pantograph, 6-first high-voltage box, 7-second high-voltage box, 8-first traction transformer, 9-second traction transformer, 10-third traction transformer, 11-first auxiliary converter, 12-second auxiliary converter, 13-third auxiliary converter, 14-first traction converter, 15-second traction converter, 16-third traction converter, 17-fourth traction converter, 18-fifth traction converter, 19-sixth traction converter, 20-traction motor, 21-first storage battery, 22-second storage battery, 23-first car, 24-second car, 25-third car, 26-fourth car, 27-fifth car, 28-sixth car, 29-seventh car, 30-eighth car, 31-high-voltage busbar, 32-first disconnect switch, 33-second disconnect switch, 34-third disconnect switch, 35-high-voltage input end, 36-high-voltage output end, 37-first current transformer, 38-first voltage transformer, 39-first vacuum circuit breaker, 40-first grounding switch, 41-fourth disconnect switch, 42-second current transformer, 43-first lightning arrester, 44-second lightning arrester.

### DETAILED DESCRIPTION OF EMBODIMENTS

To further clarify the objectives, technical solutions, and advantages of the embodiments of the present invention, technical solutions in the embodiments of the present invention will be described clearly and completely in combination with the drawings in the embodiments of the present invention below. Obviously, the described embodiments represent only a portion of, and not all of the embodiments of the present invention. The components of the embodiments of the present invention, as generally described and illustrated in the drawings, may be arranged and designed in a variety of different configurations. Therefore, the following detailed description of the embodiments of the present invention, as provided in the drawings, is not intended to limit the claimed scope of the present invention, but rather merely represents selected embodiments of the present invention. Any other embodiments derived by a those skilled in the art based on the embodiments of the present invention without inventive effort are also within the scope of protection of the present invention.

To further clarify the objectives, technical solutions, and advantages of the embodiments of the present invention, technical solutions in the embodiments of the present invention will be described clearly and completely in combination with the drawings in the embodiments of the present invention below. Obviously, the described embodiments represent only a portion of, and not all of the embodiments of the present invention. The components of the embodiments of the present invention, as generally described and illustrated in the drawings, may be arranged and designed in a variety of different configurations. Therefore, the following detailed description of the embodiments of the present invention, as provided in the drawings, is not intended to limit the claimed scope of the present invention, but rather merely represents selected embodiments of the present invention. Any other embodiments derived by those skilled in the art based on the embodiments of the present invention without inventive effort are also within the scope of protection of the present invention.

The present invention has discovered that a layout way of the traction power units in existing train sets results in poor power redundancy in the train traction system, an inability to quickly adjust the formation, and poor formation flexibility.

An embodiment of the present invention provides a traction power system for a variable formation train, including two fixed traction power units and N variable traction power units, where N is a natural number; the fixed traction power units includes a first pantograph, a first high-voltage box, a first traction transformer, a first auxiliary converter, a first storage battery, a first traction converter, a second traction converter, and several traction motors; the first pantograph is connected to an input end of the first high-voltage box, and an output end of the first high-voltage box is connected to a high-voltage busbar; an input end of the first traction transformer is connected to the high-voltage busbar via a first disconnect switch, an output end of the first traction transformer is connected to the first traction converter and the second traction converter, respectively; an output end of the first traction converter is connected to four of the traction motors, and an output end of the second traction converter is connected to four of the traction motors; the output end of the first traction converter is further connected to an input end of the first auxiliary converter, an output end of the first auxiliary converter is connected to the first storage battery, and the first auxiliary converter is configured to charge the first storage battery; and the variable traction power unit includes a second traction transformer, a third traction converter, a fourth traction converter, a second auxiliary converter, and several traction motors; an input end of the second traction transformer is connected to the high-voltage busbar via a second disconnect switch; an output end of the second traction transformer is connected to the third traction converter and the fourth traction converter, respectively; an output end of the third traction converter is connected to four of the traction motors, an output end of the fourth traction converter is connected to four of the traction motors; and the output end of the third traction converter is further connected to an input end of the second auxiliary converter.

Another embodiment of the present invention provides a variable formation train including 3+2N+3 cars, where N is a natural number, and the variable formation train further includes the traction power system for a variable formation train as described in any of the above embodiments, wherein one of the fixed traction power units is provided in the first three cars, one of the fixed traction power units is provided in the last three cars, and N variable traction power units are distributed in the intermediate 2N cars; and the first car and the last car of the train are pure trailer cars.

The traction power system for a variable formation train provided in this embodiment of the present invention, i.e., a variable formation train, has the following advantages.
1. The present invention allows for adjustment of train formations according to the requirements of different operating scenarios, rapidly achieving transitions between different formation forms of the train, greatly improving the flexibility of the train formation, and achieving the optimal train performance utilization.
2. The present invention provides strong independence between the fixed traction power units and the variable traction power units. Moreover, high-voltage components, traction transformers, and traction converters can be fully universal in different formations, facilitating transitions between different formation forms, and improving the efficiency of train formation operations and reducing workload.
3. The traction transformer in the present invention adopts a one-to-two configuration, one traction transformer with two traction converters, which is light in weight and can be mounted under the motor car.
4. The fixed traction power units in the traction power system of the variable formation train in the present invention include eight traction motors (two motor cars and one trailer car), the variable traction power units include eight traction motors (two motor cars). This provides high power redundancy and can be configured, for example, as 4 motors and 2 trailers (4M2T), 6 motors and 2 trailers (6M2T), or 8 motors and 2 trailers (8M2T), and the starting acceleration requirement of a user for the urban train can be well met.
5. The train formation form in the present invention adopts a pure trailer solution for the leading car, which also has advantages in train anti-skid and idling control.
6. In the present invention, the first disconnect switch, the second disconnect switch, the third disconnect switch and the fourth disconnect switch are provided. Once the train detects a traction transformer fault, a traction converter fault, or other fault at the traction power unit level, the disconnect switch connected to the traction unit is activated and disconnected. The train only loses partial power, making it more adaptable to unmanned driving mode.

Technical solutions in the embodiments of the present invention will be described clearly and completely in combination with the drawings in the embodiments of the present invention below. Obviously, the described embodiments represent only a portion of, and not all of the embodiments of the present invention. All other embodiments derived by those ordinarily skilled in the art based on the embodiments of the present invention without inventive effort are within the scope of protection of the present invention.

References herein to "embodiments" mean that the specific features, structures, or characteristics described in combination with the embodiments may be included in at least one embodiment of the present invention. The appearance of such phrases in various places in the specification does not necessarily refer to the same embodiment, nor do they constitute independent or alternative embodiments that are mutually exclusive with other embodiments. It is understood by those skilled in the art, both explicitly and implicitly, that the embodiments described herein may be combined with other embodiments.

### Embodiment 1

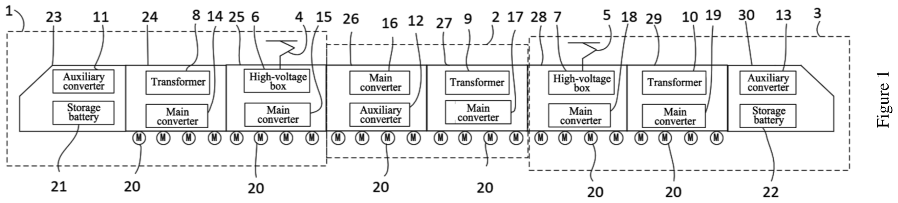

In the embodiments of the present invention, a traction power system for a variable formation train is provided, as shown in Figure 1, including a first fixed traction power unit 1, a second fixed traction power unit 3, and several variable traction power units 2. Figure 1 illustrates an example of a system having one variable traction power unit 2 in Embodiment 1. The traction power system for a variable formation train in this embodiment includes a first pantograph 4, a second pantograph 5, a first high-voltage box 6, a second high-voltage box 7, a first traction transformer 8, a second traction transformer 9, a third traction transformer 10, a first auxiliary converter 11, a second auxiliary converter 12, a third auxiliary converter 13, a first traction converter 14, a second traction converter 15, a third traction converter 16, a fourth traction converter 17, a fifth traction converter 18, a sixth traction converter 19, a traction motor 20, a first storage battery 21, and a second storage battery 22. The layout of the various components in the traction power system is also shown in Figure 1. The first auxiliary converter 11 and the first storage battery 21 are located in a first car 23. The first traction transformer 8, the first traction converter 14, and four traction motors 20 are located in a second car 24. The first pantograph 4, the first high-voltage box 6, the second traction converter 15, and four traction motors 20 are located in a third car 25. The second auxiliary converter 12, the third traction converter 16, and four traction motors 20 are located in a fourth car 26. The second traction transformer 9, the fourth traction converter 17, and four traction motors 20 are located in a fifth car 27. The second pantograph 5, the second high-voltage box 7, the fifth traction converter 18, and four traction motors 20 are located in a sixth car 28. The third traction transformer 10, the sixth traction converter 19, and four traction motors 20 are located in a seventh car 29. The second auxiliary converter 12 and the second storage battery 22 are located in an eighth car 30. The first car 23, the second car 24, the third car 25, the fourth car 26, the fifth car 27, the sixth car 28, the seventh car 29, and the eighth car 30 are adjacent to each other consecutively. In other words, each fixed traction power unit is distributed across three adjacent cars, and each variable traction power unit is distributed across two adjacent cars.

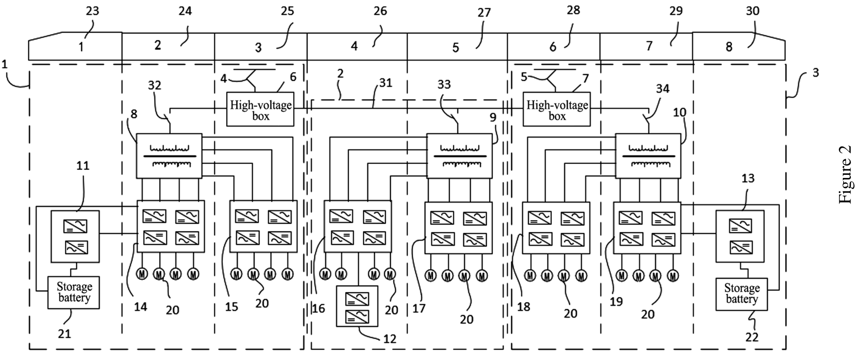

As shown in Figure 2, the first fixed traction power unit 1 includes the first pantograph 4, the first high-voltage box 6, the first traction transformer 8, the first auxiliary converter 11, the first storage battery 21, the first traction converter 14, the second traction converter 15, and several traction motors 20. The first pantograph 4 is connected to a high-voltage input end of the first high-voltage box 6 via a cable, and a high-voltage output end of the first high-voltage box 6 is connected to a high-voltage busbar 31. An input end of the first traction transformer 8 is connected to the high-voltage busbar 31 via a first disconnect switch 32. An output end of the first traction transformer 8 is connected to the first traction converter 14 and the second traction converter 15, respectively. An output end of the first traction converter 14 is connected to four of the traction motors 20, and an output end of the second traction converter 15 is connected to four of the traction motors 20. The output end of the first traction converter 14 is also connected to an input end of the first auxiliary converter 11, and an output end of the first auxiliary converter 11 is connected to the first storage battery 21. The first auxiliary converter 11 is configured to charge the first storage battery 21.

The variable traction power unit 2 includes the second traction transformer 9, the third traction converter 16, the fourth traction converter 17, the second auxiliary converter 12, and several traction motors 20. An input end of the second traction transformer 9 is connected to the high-voltage bus 31 via a second disconnect switch 33. An output end of the second traction transformer 9 is connected to the third traction converter 16 and the fourth traction converter 17, respectively. An output end of the third traction converter 16 is connected to four of the traction motors 20, and an output end of the fourth traction converter 17 is connected to four of the traction motors. The output end of the third traction converter 16 is also connected to an input end of the second auxiliary converter 12. The second auxiliary converter 12 serves as a backup or provides power to other systems on the train, for example DC 110V loads such as the lighting system, control power supply system, passenger information and broadcasting system, three-phase AC 380V loads such as the HVAC system, train heating system, and cooling system, and AC 220V loads such as power outlets and hot water supply systems.

The second fixed traction power unit 3 includes the second pantograph 5, the second high-voltage box 7, the third traction transformer 10, the third auxiliary converter 13, the second storage battery 22, the fifth traction converter 18, the sixth traction converter 19, and several traction motors 20. The second pantograph 5 is connected to a high-voltage input end of the second high-voltage box 7 via a cable, and a high-voltage output end of the second high-voltage box 7 is connected to a high-voltage busbar 31. An input end of the third traction transformer 10 is connected to the high-voltage busbar 31 via a third disconnect switch 34. An output end of the third traction transformer 10 is connected to the fifth traction converter 18 and the sixth traction converter 19, respectively. An output end of the fifth traction converter 18 is connected to four of the traction motors 20, and an output end of the sixth traction converter 19 is connected to four of the traction motors 20. The output end of the sixth traction converter 19 is also connected to an input end of the third auxiliary converter 13, an output end of the third auxiliary converter 13 is connected to the second storage battery 22. The third auxiliary converter 13 is configured to charge the second storage battery 22.

In the present invention, the first disconnect switch 32, the second disconnect switch 33, and the third disconnect switch 34 are provided. Once the train detects a traction transformer fault, a traction converter fault, or other fault at the traction power unit level (a fixed traction power unit or a variable traction power unit), the disconnect switch connected to the traction unit is activated and disconnected. The train only loses partial power, or is replaced by another traction power unit, making it more adaptable to unmanned driving mode.

In this embodiment, the traction transformer is connected to the high-voltage box. The traction transformer steps down a single-phase high-voltage AC power from the pantograph and the high-voltage box, for example, from 25kV AC to 1500V AC. The AC power is then transformed by the traction transformer and output to power the traction converter. The traction converter converts stepped-down single-phase AC power (e.g., 1500V AC) into high-voltage DC power (e.g., 3600V DC) through its internal AC-DC module. This power is then converted into three-phase AC power (e.g., 0-2808V three-phase) with controllable voltage and frequency through its internal inverter module. This power is then supplied to the AC traction motor (i.e., a three-phase asynchronous motor), and the AC traction motor in turn pulls the entire train by a rotation of the motor.

In the present invention, both the traction converter and the auxiliary converter are conventional, existing equipment. The traction converter is a one of key components of a train and generally includes a pulse rectifier power unit, an inverter power unit, a filter unit, and a cooling unit. The traction converter rectifies the single-phase AC power from the traction transformer into DC power, then inverts the DC power into three-phase AC power with variable frequency. A controlling of starting, braking, and speed regulation of the AC traction motor are achieved through a controlling of voltage and frequency regulation. When the train is in traction condition, the traction converter converts the single-phase AC power on a secondary winding of the traction transformer into the three-phase power with variable voltage and frequency conversion required to drive the traction motor. During braking, the traction motor is in generating condition, and the traction converter feeds the electric energy generated by the motor back to the power grid.

In some embodiments, the first traction converter 14, the third traction converter 16, and the sixth traction converter 19 are traction-auxiliary-charging integrated converters, including two dual-four-quadrant rectifier modules, two dual-main inverter modules, an auxiliary module, and a charging module. The auxiliary module outputs three-phase 380VAC to power the HVAC system, heating system, and cooling system of the train. The charging module provides 110V DC to charge the batteries. Output ends of the first traction converter 14 and the sixth traction converter 19 are also connected to the first storage battery and second storage battery, respectively, providing backup charging circuits.

The auxiliary converter is configured to power locomotive auxiliary equipment. In the present invention, the input end of the auxiliary converter is connected to the output end of the traction converter. The auxiliary converter draws power (e.g., 3600V DC) from the intermediate DC link of the traction converter operating. Internal functional modules convert this DC power into three-phase AC power, which is then supplied to a three-phase AC busbar and charger of the train. The traction converter outputs 3600V DC power to the auxiliary converter via its internal rectifier module. The auxiliary converter, through its internal auxiliary converter, filter, isolation transformer, and charger, outputs three-phase 380VAC power to the HVAC system, heating system, and cooling system of the train, and outputs 110V DC power to charge the storage battery.

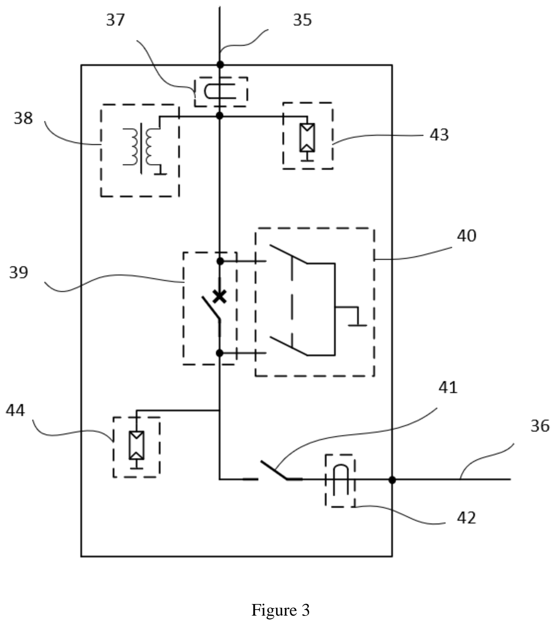

The high-voltage box, that is, high-voltage electrical box, is a front-end component of the electrical traction system circuit of the train vehicle, realizing the circuit switching and protection functions of the traction system. As shown in Figure 3, the first high-voltage box 6 and the second high-voltage box 7 in the present invention each include a high-voltage input end 35, a high-voltage output end 36, a first current transformer 37, a first voltage transformer 38, a first vacuum circuit breaker 39, and a first grounding switch 40, a fourth disconnect switch 41, a second current transformer 42, a first lightning arrester 43 and a second lightning arrester 44. The high voltage input end 35 is connected to an input end of the first current transformer 37, an output end of the first current transformer 37 is connected to an input end of the first vacuum circuit breaker 39, an output end of the first vacuum circuit breaker 39 is connected to one end of the fourth disconnect switch 41, the other end of the fourth disconnect switch 41 is connected to an input end of the second current transformer 42, and an output end of the second current transformer 42 is connected to the high-voltage output end 36. The output end of the first current transformer 37 is connected to one end of a primary coil of the first voltage transformer 38, the other end of the primary coil is grounded. The first grounding switch 40 is a bipolar grounding switch. The input end and the output end of the first vacuum circuit breaker 39 are connected to one end of two poles of the first grounding switch 40, respectively, and the other ends of two poles of the first grounding switch 40 are grounded.

The first current transformer 37, the first voltage transformer 38, the first vacuum circuit breaker 39, the first grounding switch 40, the fourth disconnect switch 41, and the second current transformer 42, etc. are provided in the high-voltage box in the present invention. In the event of a fault, such as the high-voltage busbar grounding, the data from the first current transformer 37 or the second current transformer 42 will exceed a limit, and the fault can be determined. The train can disconnect the first vacuum circuit breaker 39 and the fourth disconnect switch 41 on a side of the faulty pantograph, and replace the pantograph to handle the fault, thereby reducing manual intervention and better adapting to the unmanned driving mode.

The lightning arrester is also provided in the high-voltage box in the present invention. The first lightning arrester 43 is provided between the output end of the first current transformer 37 and ground. The second lightning arrester 44 is provided between the output end of the first vacuum circuit breaker 39 and ground. "Ground" here refers to the railroad tracks, and "grounding" refers to the connection to the railroad tracks.

In other embodiments, a number of variable traction power units 2 can be 0, 2, 3, 4, 5, 6, 7, 8, 9, 10, and so on, that is, the number of variable traction power units 2 is a natural number. For these embodiments, the traction power system only needs to add the corresponding variable traction power units, and the traction transformers of the variable traction power units are connected to the high-voltage busbar via disconnect switches. A detailed description is omitted here.

The traction power system for a variable formation train provided in the present invention includes two fixed traction power units and N variable traction power units, where N is a natural number (0, 1, 2, 3, 4, 5, 6, 7, 8, 9, 10, etc.). The fixed traction power units are provided in the leading car, and the variable traction power units are provided in the intermediate cars. The train formation can be adjusted according to the requirements of different operational scenarios (e.g., 6-formation, 8-formation, 10-formation, 12-formation, 14-formation, 16-formation, 18-formation, 20-formation, etc.), rapidly achieving transitions between different formation forms of a train, greatly improving the flexibility of the train formation, and achieving the optimal train performance utilization. Furthermore, regardless of how the train formation is changed, the train only contains two pantographs and two high-voltage boxes, the high-voltage output ends of the high-voltage boxes are connected to the high-voltage busbar, and the traction transformers in both the fixed traction power units and the variable traction power units are all connected to the high-voltage busbar via disconnect switches, providing strong independence between the fixed traction power units and the variable traction power units, facilitating transitions between different formation forms, and improving the efficiency of train formation operations and reducing workload. The traction transformer adopts a one-to-two configuration, one traction transformer with two traction converters, which is light in weight and can be mounted under the motor car. At the same time, the fixed traction power units in the traction power system of the variable formation train in the present invention include eight traction motors (two motor cars and one trailer car), and the variable traction power units include eight traction motors (two motor cars). This provides high power redundancy and can be configured, for example, as 4 motors and 2 trailers (4M2T), 6 motors and 2 trailers (6M2T), or 8 motors and 2 trailers (8M2T), and the starting acceleration requirement of a user for an urban train can be well met.

### Embodiment 2

Accordingly, some embodiments of the present invention further provide a variable formation train including 3+2N+3 cars, where N is a natural number, such as 0, 1, 2, 3, 4, 5, 6, 7, 8, 9, 10, and N is also the number of variable traction power units; and further including the traction power system for the variable formation train described in any of the above embodiments. The first three cars of the variable formation train are provided with one fixed traction power unit, the last three cars are provided with one fixed traction power unit, and the intermediate 2N cars are equipped with N variable traction power units. The first and last cars of the train are pure trailer cars.

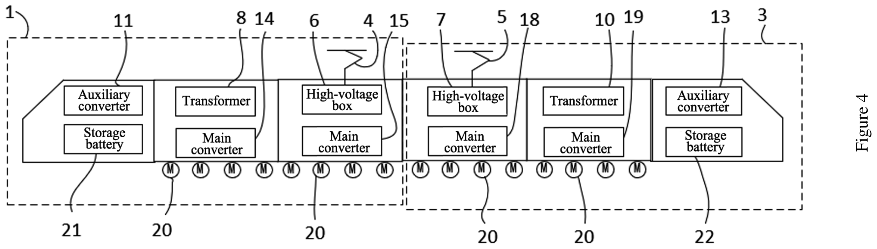

For example, in some embodiments, the train includes six-car formation, as shown in Figure 4, with a first car, a second car, a third car, a fourth car, a fifth car, and a sixth car adjacent to each other consecutively. The first fixed traction power unit 1 is provided in the first car, the second car, and the third car, and the second fixed traction power unit 3 is provided in the fourth car, the fifth car, and the sixth car. No variable traction power unit 2 is provided in the six-car formation. The first auxiliary converter 11 and the first storage battery 21 are provided on the first car; the first traction transformer 8, the first traction converter 14, and four traction motors 20 are provided on the second car; and the first pantograph 4, the first high-voltage box 6, the second traction converter 15, and the four traction motors 20 are provided on the third car. The second pantograph 5, the second high-voltage box 7, the fifth traction converter 18, and the four traction motors 20 are provided on the fourth car; the third traction transformer 10, the sixth traction converter 19, and the four traction motors 20 are provided on the fifth car; and the second auxiliary converter 12 and the second storage battery 22 are provided on the sixth car.

For example, in some embodiments, the train includes eight-car formation, as shown in Figure 1, with a first car, a second car, a third car, a fourth car, a fifth car, a sixth car, a seventh car, and an eighth car adjacent to each other consecutively. The first fixed traction power unit 1 is provided in the first car, the second car, and the third car, the second fixed traction power unit 3 is provided in the sixth car, the seventh car, and the eighth car, and one variable traction power unit 2 is provided in the fourth car and the fifth car. The first auxiliary converter 11 and the first storage battery 21 are provided on the first car; the first traction transformer 8, the first traction converter 14, and four traction motors 20 are provided on the second car; the first pantograph 4, the first high-voltage box 6, the second traction converter 15, and the four traction motors 20 are provided on the third car. The second pantograph 5, the second high-voltage box 7, the fifth traction converter 18, and the four traction motors 20 are provided on the sixth car; the third traction transformer 10, the sixth traction converter 19, and the four traction motors 20 are provided on the seventh car; and the second auxiliary converter 12 and the second storage battery 22 are provided on the eighth car. The variable traction power unit 2 can be divided into two situations depending on its layout. In some embodiments, the second auxiliary converter 12, the third traction converter 16, and the four traction motors 20 are provided on the fourth car, and the second traction converter 9, the fourth traction converter 17, and the four traction motors 20 are provided on the fifth car. Alternatively, in some embodiments, the second auxiliary converter 12, the third traction converter 16 and four traction motors 20 are provided on the fifth car, and the second traction transformer 9, the fourth traction converter 17 and four traction motors 20 are provided on the fourth car.

For example, in some embodiments, a train includes ten-car formation, with a first car, a second car, a third car, a fourth car, a fifth car, a sixth car, a seventh car, an eighth car, a ninth car, and a tenth car adjacent to each other consecutively. The first fixed traction power unit 1 is provided in the first car, second car, and third car; the second fixed traction power unit 3 is provided in the eighth car, ninth car, and tenth car; and one variable traction power unit 2 is provided in the fourth car and fifth car. One variable traction power unit 2 is provided in the sixth car and seventh car. The first auxiliary converter 11 and the first storage battery 21 are provided on the first car; the first traction transformer 8, the first traction converter 14, and four traction motors 20 are provided on the second car; and the first pantograph 4, the first high-voltage box 6, the second traction converter 15, and the four traction motors 20 are provided on the third car. The second pantograph 5, the second high-voltage box 7, the fifth traction converter 18, and the four traction motors 20 are provided on the eighth car; the third traction transformer 10, the sixth traction converter 19, and the four traction motors 20 are provided on the ninth car; and the second auxiliary converter 12 and the second storage battery 22 are provided on the tenth car. On the intermediate fourth car, the fifth car, the sixth car and the seventh car, the second auxiliary converter 12, the third traction converter 16 and four traction motors 20 are provided on any one of the fourth car and fifth car, and correspondingly, the second traction transformer 9, the fourth traction converter 17 and four traction motors 20 are provided on the other car. The second auxiliary converter 12, the third traction converter 16 and the four traction motors 20 are provided on any one of the sixth car and the seventh car, and correspondingly, a second traction transformer 9, a fourth traction converter 17 and the four traction motors 20 are provided on the other car. Keep each of the variable traction power units distributed on two adjacent cars. In each of the variable traction power units: the second auxiliary converter, the third traction converter and four traction motors are provided on one car; the second traction transformer, the fourth traction converter and four traction motors are provided on another adjacent car. The variable traction power unit 2 is divided into four situations according to different layout ways. For example, in some embodiments, the second auxiliary converter 12, the third traction converter 16 and four traction motors 20 are provided on the fourth car and the seventh car, and the second traction transformer 9, the fourth traction converter 17 and four traction motors 20 are provided on the fifth car and the sixth car. For example, in some embodiments, the second auxiliary converter 12, the third traction converter 16 and four traction motors 20 are provided on the fourth car and the sixth car, and the second traction transformer 9, the fourth traction converter 17 and four traction motors 20 are provided on the fifth car and the seventh car. For example, in some embodiments, the second traction transformer 9, the fourth traction converter 17 and the four traction motors 20 are provided on the fourth car and the seventh car, and the second auxiliary converter 12, the third traction converter 16 and the four traction motors 20 are provided on the fifth car and the sixth car. For example, in some embodiments, the second traction transformer 9, the fourth traction converter 17, and the four traction motors 20 are provided on the fourth car and the sixth car, and the second auxiliary converter 12, the third traction converter 16, and the four traction motors 20 are provided on the fifth car and the seventh car.

For example, in some embodiments, a train includes twelve-car formation, with a first car, a second car, a third car, a fourth car, a fifth car, a sixth car, a seventh car, an eighth car, a ninth car, a tenth car, an eleventh car, and a twelfth car adjacent to each other consecutively. The first fixed traction power unit 1 is provided in the first car, the second car, and the third car, the second fixed traction power unit 3 is provided in the tenth car, the eleventh car, and the twelfth car, one variable traction power unit 2 is provided in the fourth car and the fifth car, one variable traction power unit 2 is provided in the sixth car and the seventh car, and one variable traction power unit 2 is provided in the eighth car and the ninth car. The first auxiliary converter 11 and the first storage battery 21 are provided on the first car; the first traction transformer 8, the first traction converter 14, and four traction motors 20 are provided on the second car; the first pantograph 4, the first high-voltage box 6, the second traction converter 15, and the four traction motors 20 are provided on the third car. The second pantograph 5, the second high-voltage box 7, the fifth traction converter 18, and the four traction motors 20 are provided on the tenth car; the third traction converter 10, the sixth traction converter 19, and the four traction motors 20 are provided on the eleventh car; and the second auxiliary converter 12 and the second storage battery 22 are provided on the twelfth car. On the middle fourth car, the fifth car, the sixth car, the seventh car, the eighth car and the ninth car, the second auxiliary converter 12, the third traction converter 16 and the four traction motors 20 are provided on any one of the fourth car and the fifth car, and correspondingly, the second traction transformer 9, the fourth traction converter 17 and the four traction motors 20 are provided on the other car. The second auxiliary converter 12, the third traction converter 16, and four traction motors 20 are provided on any one of the sixth car and the seventh car, and correspondingly, the second traction transformer 9, the fourth traction converter 17, and four traction motors 20 are provided on the other car. The second auxiliary converter 12, the third traction converter 16, and four traction motors 20 are provided on any one of the eighth car and the ninth car, and correspondingly, the second traction transformer 9, the fourth traction converter 17 and the four traction motors 20 are provided on the other car. The variable traction power unit 2 is divided into 8 situations according to different layout ways. For example, in some embodiments, the second auxiliary converter 12, the third traction converter 16, and four traction motors 20 are provided on the fourth car, the seventh car, and the ninth car, and the second traction transformer 9, the fourth traction converter 17, and four traction motors 20 are provided on the fifth car, the sixth car, and the eighth car. For example, in some embodiments, the second auxiliary converter 12, the third traction converter 16 and the four traction motors 20 are provided on the fifth car, the sixth car and the eighth car, and the second traction transformer 9, the fourth traction converter 17 and the four traction motors 20 are provided on the fourth car, the seventh car and the ninth car. Specific layouts of the other configurations are not detailed here. As long as each variable traction power unit is distributed across two adjacent cars, within each variable traction power unit: the second auxiliary converter, the third traction converter, and the four traction motors are provided on one car; and the second traction transformer, the fourth traction converter, and the four traction motors are provided on another adjacent car.

A variable formation train provided an embodiment of the present invention includes 3+2N+3 cars, where N is a natural number, such as 0, 1, 2, 3, 4, 5, 6, 7, 8, 9, 10, and so on. N also represents the number of variable traction power units. The fixed traction power units are provided in the leading car, and the variable traction power units are provided in the intermediate cars. The train formation can be adjusted according to the requirements of different operational scenarios (e.g., 6-formation, 8-formation, 10-formation, 12-formation, 14-formation, 16-formation, 18-formation, 20-formation, 22-formation, 24-formation, 26- formation, etc.), rapidly achieving transitions between different formation forms of a train, greatly improving the flexibility of the train formation, and achieving the optimal train performance utilization. Furthermore, regardless of how the train formation is changed, the train only contains two pantographs and two high-voltage boxes, the high-voltage output ends of the high-voltage boxes are connected to the high-voltage busbar, and the traction transformers in both the fixed traction power units and the variable traction power units are all connected to the high-voltage busbar via disconnect switches, providing strong independence between the fixed traction power units and the variable traction power units. Moreover, high-voltage components, traction transformers, and traction converters can be fully universal in different formations, facilitating transitions between different formation forms, and therefore improving the efficiency of train formation operations and reducing workload, and facilitating repair and maintenance. Furthermore, the traction transformer adopts a one-to-two configuration, one traction transformer with two traction converters, which is light in weight and can be mounted under the motor car. Furthermore, the fixed traction power units in the traction power system of the variable formation train in the present invention include eight traction motors (two motor cars and one trailer car), the variable traction power units include eight traction motors (two motor cars). This provides high power redundancy and can be configured, for example, as 4 motors and 2 trailers (4M2T), 6 motors and 2 trailers (6M2T), or 8 motors and 2 trailers (8M2T), and the starting acceleration requirement of a user for the urban train can be well met. In addition, the train formation form in the present invention adopts a pure trailer solution for the leading car, which also has advantages in train anti-skid and idling control.

The above describes the embodiments of the present invention in detail. Specific examples are used herein to illustrate the principles and implementation methods of the present invention. The description of the above embodiments is only used to help understand the method and its core idea of the present invention. At the same time, for those ordinarily skilled in the art, according to the idea of the present invention, there may be changes in the specific embodiments and application scope. In summary, the content of this specification should not be understood as a limitation on the present invention.

## Claims

1. A traction power system for a variable formation train, **characterized by** comprising two fixed traction power units and N variable traction power units, where N is a natural number,
wherein the fixed traction power units comprises a first pantograph, a first high-voltage box, a first traction transformer, a first auxiliary converter, a first storage battery, a first traction converter, a second traction converter, and several traction motors; the first pantograph is connected to an input end of the first high-voltage box, and an output end of the first high-voltage box is connected to a high-voltage busbar; an input end of the first traction transformer is connected to the high-voltage busbar via a first disconnect switch, an output end of the first traction transformer is connected to the first traction converter and the second traction converter, respectively; an output end of the first traction converter is connected to four of the traction motors, and an output end of the second traction converter is connected to four of the traction motors; the output end of the first traction converter is further connected to an input end of the first auxiliary converter, an output end of the first auxiliary converter is connected to the first storage battery, and the first auxiliary converter is configured to charge the first storage battery; and
the variable traction power unit comprises a second traction transformer, a third traction converter, a fourth traction converter, a second auxiliary converter, and several traction motors; an input end of the second traction transformer is connected to the high-voltage busbar via a second disconnect switch; an output end of the second traction transformer is connected to the third traction converter and the fourth traction converter, respectively; an output end of the third traction converter is connected to four of the traction motors, an output end of the fourth traction converter is connected to four of the traction motors; and the output end of the third traction converter is further connected to an input end of the second auxiliary converter.

2. The traction power system for a variable formation train according to claim 1, wherein each of the fixed traction power units is distributed across three adjacent cars, and each of the variable traction power units is distributed across two adjacent cars.

3. The traction power system for a variable formation train according to claim 1, wherein the first high-voltage box comprises a high-voltage input end, a high-voltage output end, a first current transformer, a first voltage transformer, a first vacuum circuit breaker, a first grounding switch, a fourth disconnect switch, and a second current transformer; the high-voltage input end is connected to an input end of the first current transformer, an output end of the first current transformer is connected to an input end of the first vacuum circuit breaker, an output end of the first vacuum circuit breaker is connected to one end of the fourth disconnect switch, the other end of the fourth disconnect switch is connected to an input end of the second current transformer, and the output end of the second current transformer is connected to the high-voltage output end;
the output end of the first current transformer is connected to one end of a primary coil of the first voltage transformer, and the other end of the primary coil is grounded; and
the first grounding switch is a bipolar grounding switch, wherein the input end and the output end of the first vacuum circuit breaker are respectively connected to one end of two poles of the first grounding switch, and the other ends of two poles of the first grounding switch are both grounded.

4. The traction power system for a variable formation train according to claim 3, wherein a first lightning arrester is further provided between the output end of the first current transformer and ground; and a second lightning arrester is provided between the output end of the first vacuum circuit breaker and ground.

5. The traction power system for a variable formation train according to claim 1, wherein the first traction converter and the third traction converter are traction-auxiliary-charging integrated converters; and the output end of the first traction converter is further connected to the first storage battery.

6. A variable formation train, comprising 3+2N+3 cars, where N is a natural number, **characterized in that** the variable formation train further comprises the traction power system for a variable formation train according to any one of claims 1-5, wherein one of the fixed traction power units is provided in the first three cars, one of the fixed traction power units is provided in the last three cars, and N variable traction power units are distributed in the intermediate 2N cars; and the first car and the last car of the train are pure trailer cars.

7. The variable formation train according to claim 6, wherein the variable formation train comprises a six-car formation, wherein a first car, a second car, a third car, a fourth car, a fifth car, and a sixth car are adjacent to each other consecutively, one of the fixed traction power units is provided in the first car, the second car, and the third car, and one of the fixed traction power units is provided in the fourth car, the fifth car, and the sixth car, and no variable traction power unit is provided in the six-car formation, wherein both the first car and the sixth car are provided with the first auxiliary converter and the first storage battery; both the second car and the fifth car are provided with the first traction transformer, the first traction converter, and four traction motors; and both the third car and the fourth car are provided with the first pantograph, the first high-voltage box, the second traction converter, and four traction motors.

8. The variable formation train according to claim 6, wherein the variable formation train comprises an eight-car formation, wherein a first car, a second car, a third car, a fourth car, a fifth car, a sixth car, a seventh car, and an eighth car are adjacent to each other consecutively; one of the fixed traction power units is provided in the first car, the second car and the third car, one of the fixed traction power units is provided in the sixth car, the seventh car and the eighth car, and one of the variable traction power units is provided in the fourth car and the fifth car, wherein both the first car and the eighth car are provided with the first auxiliary converter and the first storage battery; both the second car and the seventh car are provided with the first traction transformer, the first traction converter, and four traction motors; and both the third car and the sixth car are provided with the first pantograph, the first high-voltage box, the second traction converter, and four traction motors; and
the second auxiliary converter, the third traction converter and four traction motors are provided on the fourth car, and the second traction transformer, the fourth traction converter and four traction motors are provided on the fifth car; or the second auxiliary converter, the third traction converter and four traction motors are provided on the fifth car, and the second traction transformer, the fourth traction converter and four traction motors are provided on the fourth car.

9. The variable formation train according to claim 6, wherein the variable formation train comprises a ten-car formation, wherein a first car, a second car, a third car, a fourth car, a fifth car, a sixth car, a seventh car, an eighth car, a ninth car, and a tenth car are adjacent to each other consecutively; one of the fixed traction power units is provided in the first car, the second car and the third car, one of the fixed traction power units is provided in the eighth car, the ninth car and the tenth car, one of the variable traction power units is provided in the fourth car and the fifth car; one of the variable traction power units is provided in the sixth car and the seventh car, wherein both the first car and the tenth car are provided with the first auxiliary converter and the first storage battery; both the second car and the ninth car are provided with the first traction transformer, the first traction converter, and four traction motors; and both the third car and the eighth car are provided with the first pantograph, the first high-voltage box, the second traction converter, and four traction motors,
wherein in each of the variable traction power units: the second auxiliary converter, the third traction converter, and four traction motors are provided in one car; and the second traction transformer, the fourth traction converter, and four traction motors are provided in the other car.

10. The variable formation train according to claim 6, wherein the variable formation train comprises a twelve-car formation, wherein a first car, a second car, a third car, a fourth car, a fifth car, a sixth car, a seventh car, an eighth car, a ninth car, a tenth car, an eleventh car, and a twelfth car are adjacent to each other consecutively; one of the fixed traction power units is provided in the first car, the second car and the third car, one of the fixed traction power units is provided in the tenth car, the eleventh car and the twelfth car, one of the variable traction power units is provided in the fourth car and the fifth car; one of the variable traction power units is provided in the sixth car and the seventh car; and one of the variable traction power units is provided in the eighth car and the ninth car,
wherein both the first car and the twelfth car are provided with the first auxiliary converter and the first storage battery; both the second car and the eleventh car are provided with the first traction transformer, the first traction converter, and four traction motors; and both the third car and the tenth car are provided with the first pantograph, the first high-voltage box, the second traction converter, and four traction motors,
wherein in each of the variable traction power units: the second auxiliary converter, the third traction converter, and four traction motors are provided in one car; and the second traction transformer, the fourth traction converter, and four traction motors are provided in the other car.
